(19)

Europäisches Patentamt
European Patent Office
Office européen des brevets

(11) **EP 2 287 585 A2**

(12) **EUROPÄISCHE PATENTANMELDUNG**

(43) Veröffentlichungstag:
**23.02.2011  Patentblatt 2011/08**

(51) Int Cl.:
*G01L 5/28* (2006.01)     *G01M 17/007* (2006.01)

(21) Anmeldenummer: **10173322.8**

(22) Anmeldetag: **18.08.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **18.08.2009   DE 102009037842**

(71) Anmelder: **MAHA Maschinenbau Haldenwang GmbH & Co. KG**
**87490 Haldenwang (DE)**

(72) Erfinder: **Keseberg, Engelbert**
**87435, Kempten (DE)**

(74) Vertreter: **MERH-IP**
**Matias Erny Reichl Hoffmann**
**Paul-Heyse-Strasse 29**
**80336 München (DE)**

(54)     **Gewichtssimulator für Fahrzeugprüfstände**

(57)     Die Erfindung betrifft einen Gewichtssimulator für Fahrzeugprüfstände, der den Schlupf zwischen Reifen und Prüfstand verringert. Des Weiteren kann bei bereits eingebauten Grubenhebern die Funktionalität eines Gewichtssimulators kostengünstig nachgerüstet werden. Der Gewichtssimulator für Fahrzeugprüfstände umfasst eine Krafterzeugungsvorrichtung 10, die ein Hubelement 20 aufweist, das im Bereich seines freien Endes einen Aufnahmebereich 70 zum Aufnehmen von zumindest einem Zugmittel 50 aufweist. Es ist zumindest ein Kraftumlenkmittel 30, 40 vorgesehen, das mittels des Zugmittels 50 mit dem Hubelement 20 zusammenwirkt, wobei das Zugmittel 50 einen ersten Abschnitt 501 mit zumindest einem Verbindungsbereich aufweist, der mit einem zu prüfenden Fahrzeug verbindbar ist. Das Hubelement 20 wirkt beim Ausfahren über das Kraftumlenkmittel 30, 40 mit dem Zugmittel 50 derart zusammen, dass das Zugmittel 50 zumindest eine Kraftkomponente in entgegengesetzter Richtung zur Ausfahrrichtung des Hubelements 20 in den Verbindungsbereich des Zugmittels 50 einleitet.

## Fig. 1

EP 2 287 585 A2

**Beschreibung**

Die vorliegende Erfindung betrifft einen Gewichtssimulator für Fahrzeugprüfstände, der den Schlupf zwischen Reifen und Prüfstand verringert. Des Weiteren kann bei bereits eingebauten Grubenhebern die Funktionalität eines Gewichtssimulators kostengünstig nachgerüstet werden.

Gewichtssimulatoren kommen bevorzugt bei der Prüfung von bestimmten Fahrzeugkomponenten, wie z. B. der Bremse oder des Motors, unter Lastbedingungen zum Einsatz, ohne dass das Fahrzeug für die Prüfung beladen werden muss. Die Durchführung der Bremsenprüfung erfolgt dabei in der Regel nach speziellen Vorschriften in mehreren Durchgängen, nämlich im Leerzustand des Fahrzeugs, mit teilbeladenem und mit voll beladenem Fahrzeug. Das Fahrzeug, in den meisten Fällen ein LKW oder ein Anhänger, wird hierzu an seinem Chassis mit einer abwärts gerichteten Zugkraft beaufschlagt, welche eine Beladung des un- oder teilbeladenen Fahrzeugs simuliert.

Diese Zugkraft wird bei bekannten Gewichtsbzw. Lastsimulatoren von mindestens einem am Boden einer Grube verankerten Druckmittelzylinder bereitgestellt, der mittels flexiblen Zugelementen, wie Ketten, Gurten oder dgl., mit einem Bauteil des Fahrzeugchassis verbunden wird und bei Aktivierung des Druckmittelzylinders das Fahrzeug während der Prüfung nach unten zieht.

Nach dem Prüfen einer Fahrzeugachse, z. B. der Vorderräder, muss das Fahrzeug auf einem Einachs-Prüfstand verfahren werden, um die jeweiligen Messungen an einer anderen Fahrzeugachse vorzunehmen. Es ist eine Aufgabe der vorliegenden Erfindung einen Gewichtssimulator für einen Fahrzeugprüfstand bereitzustellen, der den Schlupf zwischen Reifen und Prüfstand verringert. Eine weitere Aufgabe der vorliegenden Erfindung ist es, eine einfache und kostengünstige Nachrüstung des Funktionsumfangs für einen Gewichtssimulator bei bereits eingebauten Grubenhebern zu ermöglichen.

Diese Aufgabe wird erfindungsgemäß durch die Gegenstände der unabhängigen Ansprüche gelöst. Vorteilhafte Ausgestaltungen und bevorzugte Ausführungsbeispiele der Erfindung sind in den Unteransprüchen angegeben.

Erfindungsgemäß wird ein Gewichtssimulator für Kraftfahrzeuge bereitgestellt, der eine Krafterzeugungsvorrichtung umfasst, die ein Hubelement aufweist, das im Bereich seines freien Endes einen Aufnahmebereich zum Aufnehmen von zumindest einem Zugmittel aufweist. Es ist zumindest ein Kraftumlenkmittel vorgesehen, das mittels des Zugmittels mit dem Hubelement zusammenwirkt, wobei das Zugmittel einen ersten Abschnitt mit zumindest einem Verbindungsbereich aufweist, der mit einem zu prüfenden Fahrzeug verbindbar ist. Das Hubelement wirkt beim Ausfahren über das Kraftumlenkmittel mit dem Zugmittel derart zusammen, dass das Zugmittel zumindest eine Kraftkomponente in entgegengesetzter Richtung zur Ausfahrrichtung des Hubelements in den Verbindungsbereich des Zugmittels einleitet.

Dieser erfindungsgemäße Aufbau des Gewichtssimulators hat den Vorteil einer einfachen und kostengünstigen Nachrüstbarkeit des Funktionsumfangs für einen Gewichtssimulator bei bereits eingebauten Grubenhebern. Somit kann der Funktionsumfang einer Werkstatt mit einem Grubenheber erhöht werden. Weiterhin kann der Schlupf zwischen Reifen und Prüfstand während einer Bremsenprüfung aufgrund der verbesserten Krafteinleitung verringert werden.

Ein weiterer Vorteil des erfindungsgemäßen Gewichtssimulators ergibt sich für den Fall, dass die Krafterzeugungsvorrichtung ein Grubenheber ist. Bislang werden Fahrzeuge nur durch ihr Eigengewicht und durch Formschluss auf dem Grubenheber in der angehobenen Stellung gehalten. Mit dem erfindungsgemäßen Gewichtssimulator kann durch die Wirkung des Zugmittels auf das Fahrzeug, nämlich das Niederziehen des Fahrzeugs auf ein Abstützsystem, die Sicherheit in der angehobenen Position erhöht werden.

Weiterhin kann das Kraftumlenkmittel in vertikaler Richtung relativ zum freien Ende des Hubelements derart angeordnet sein, dass ein mit dem Hubelement in Kontakt stehender zweiter Abschnitt des Zugmittels im Wesentlichen horizontal oder nach unten verlaufend angeordnet ist.

Als gleichwertige Alternative bzw. als eine gleichwertige Positionsdefinition zur vorstehend erwähnten Anordnung bzw. Ausrichtung des Kraftumlenkmittels in vertikaler Richtung relativ zum freien Ende des Hubelements, wobei ein mit dem Hubelement in Kontakt stehender zweiter Abschnitt des Zugmittels im Wesentlichen horizontal oder nach unten verlaufend angeordnet ist, kann das Kraftumlenkmittel in vertikaler Richtung relativ zum freien Ende des Hubelements derart angeordnet sein, dass der mit dem Hubelement in Kontakt stehende zweite Abschnitt des Zugmittels mit dem Kraftumlenkmittel im Wesentlichen auf gleicher Höhe oder unterhalb des freien Endes des Hubelements in Kontakt kommt.

Unter einem Ruhezustand des Hubelements soll im Folgenden diejenige Position des Kolbens, bzw. eines beweglichen Krafteinleitungselements des Hubelements verstanden werden, in der sich der Kolben, bzw. das Krafteinleitungselement des Hubelements vor einer erstmaligen oder einer weiteren Betätigung des Hubelements durch den Benutzer befindet.

Es soll nun zur Verdeutlichung der vorstehend beschriebenen Alternative die Kontaktsituation zwischen dem zweiten Abschnitt des Zugmittels und dem Kraftumlenkmittel beschrieben werden, wie sie in einem Ruhezustand des Hubelements ausgebildet sein kann. Das Kraftumlenkmittel kann eine Rolle sein, wobei diese um eine Drehachse drehbar, bzw. um eine Schwenkachse schwenkbar ist.

Die Rolle kann derart in vertikaler Richtung relativ zum freien Ende des Hubelements angeordnet sein, dass der unterste Bereich ihrer Oberfläche in vertikaler Richtung, der mit dem zweiten Abschnitt des Zugmittels in Kontakt tritt, sich auf gleicher Höhe oder unterhalb des freien Endes des Hubelements befindet. Der daran angrenzende, nicht in Kontakt mit der Rolle stehende zweite Abschnitt des Bandes kann dann im Wesentlichen in horizontaler Richtung verlaufen oder diesen Kontaktbereich in tangentialer Richtung zur Oberfläche der Rolle in Richtung zum freien Ende des Hubelements verlassen. Es wird dabei davon ausgegangen, dass der zweite Abschnitt des Zugmittels jeweils einen geradlinigen Verlauf einnimmt, bzw. sich in einem, zumindest leicht, vorgespannten Zustand befindet.

Weiterhin kann bei einem erfindungsgemäßen Gewichtssimulator für Fahrzeugprüfstände das Hubelement von einem Ruhezustand bis zum Erreichen eines vorbestimmten Kraftsollwerts um den Betrag $\Delta h_1$ ausfahren, und der Verbindungsbereich des Zugmittels kann sich dabei in vertikaler Richtung um den Betrag $\Delta h_2$ bewegen, wobei der Betrag für das Verhältnis $\kappa = |\Delta h_1 / \Delta h_2|$ der Verfahrwege im Bereich von 1,5 bis 20 liegt.

Der vorbestimmte Kraftsollwert kann beispielsweise an einer Steuereinrichtung des Gewichtssimulators, bzw. des Prüfstands eingegeben werden. Die Steuereinrichtung kann mit dem Gewichtssimulator verbunden sein, wobei diese sämtliche Informationen für dessen Steuerung mit diesem austauschen, bzw. für diesen bereitstellen kann. Weiterhin kann die Steuereinrichtung über eine Fernbedienung mit einem Benutzer in Verbindung stehen, wobei der Benutzer an der Fernbedienung Eingaben für die Steuerung des Gewichtssimulators eingeben kann. Weiterhin kann der vorbestimmte Kraftsollwert mittels eines Überdruckventils im Versorgungskreislauf des Hubelements eingestellt werden. Der Ist-Kraftwert kann beispielsweise mittels eines Kraftmesssensors gemessen werden, wobei dieser zwischen dem Verbindungsbereich des Zugmittels und dem Fahrzeugchassis angeordnet sein kann. Der Kraftmesssensor kann auch zwischen dem Verbindungsbereich und dem ersten Abschnitt des Zugmittels angeordnet sein. Weiterhin kann der Kraftmesssensor im Aufnahmebereich des Zugmittels am Hubelement angeordnet sein.

Der Betrag für das Verhältnis

$$\kappa = |\Delta h_1 / \Delta h_2|$$

der Verfahrwege kann im Bereich von 1,5 bis 20 liegen. Die angegebenen Werte gelten im Wesentlichen für den Fall, dass das mit dem Fahrzeugchassis verbundene Zugmittel vor dem Ausfahren des Hubelements nur einen geringen Durchhang aufweist. Ist nur ein Kraftumlenkmittel zwischen dem ersten und zweiten Abschnitt des Zugmittels vorgesehen, so kann $\kappa$ einen Wert im Bereich von 1,5 bis 5 annehmen, während beim Einsatz einer (Kraft)Übersetzung das Verhältnis $\kappa$ einen Wert größer als 5 annehmen kann.

Vorzugsweise kann in dem Gewichtssimulator für Fahrzeugprüfstände ein Mittel zum Einstellen der Länge des Zugmittels vorgesehen sein. So kann beispielsweise ein Adapter zum Verbinden mit dem Verbindungsbereich des Zugmittels vorgesehen sein, welcher in unterschiedlichen Längen ausgebildet ist bzw. dessen Länge einstellbar ist, so dass der Durchhang des Zugmittels in der eingefahrenen Stellung des Hubelements möglichst gering wird. Weiterhin kann das Mittel zum Einstellen der Länge ein Spannschloss oder eine Spannschraube sein.

Weiterhin kann in dem Gewichtssimulator für Fahrzeugprüfstände eine Vielzahl von Kraftumlenkmittel vorgesehen und derart angeordnet sein, dass dadurch eine Übersetzung der eingeleiteten Kraft des Hubelements in den Verbindungsbereich des Zugmittels realisierbar ist. Unter einer Übersetzung soll vorzugsweise eine Kraftverstärkung verstanden werden, bei der der Betrag der vom Hubelement aufgebrachten Kraft geringer ist als der Betrag der Kraft, die über den Verbindungsbereich in das Fahrzeugchassis eingeleitet wird. Für die Realisation der Kraftübersetzung kann beispielsweise eine ähnliche Anordnung der Kraftumlenkmittel gewählt werden, wie sie von einem Seilzug bekannt ist. Sofern erforderlich, kann eine Übersetzung auch eine Kraftverringerung realisieren.

Bei einem erfindungsgemäßen Gewichtssimulator für Fahrzeugprüfstände können die Kraftumlenkmittel symmetrisch angeordnet sein. So können beispielsweise zwei Kraftumlenkmittel auf gegenüber liegenden Seiten des Hubelements vorgesehen sein. Weiterhin können vier Kraftumlenkmittel vorgesehen sein, die kreuzförmig um das Hubelement angeordnet sein können. Gegenüber liegende Kraftumlenkmittel sind dabei vorzugsweise in vertikaler Richtung im Wesentlichen auf derselben Höhe angeordnet.

Weiterhin kann in dem Gewichtssimulator für Fahrzeugprüfstände zwischen einer horizontalen Ebene, die sich durch den Aufnahmebereich erstreckt, und dem zweiten Abschnitt des Zugmittels, zu einem Zeitpunkt, an dem sich das Hubelement in der eingefahrenen Stellung befindet, ein Winkel gebildet werden, der im Wesentlichen 45° beträgt.

Wird dieser Winkel im Bereich von etwa 45° gewählt, so ergibt sich ein guter Kompromiss im Hinblick auf die Höhendifferenz in vertikaler Richtung der Einbaulage für das Kraftumlenkmittel und den Aufnahmebereich, und eine möglichst geringe Entfernung des Kraftumlenkmittels in horizontaler Richtung von dem Verbindungsbereich des Zugmittels mit dem Fahrzeugchassis, so dass vorzugsweise lediglich eine möglichst große senkrechte Kraftkomponente in das zu prüfende Fahrzeug eingeleitet wird. Der Winkel kann jedoch auch im Bereich von 0° bis 10° gewählt werden, wenn die Höhendifferenz in vertikaler Richtung der Einbaulage für das Kraftumlenkmittel und den Aufnahmebereich gering ist.

Bei einem erfindungsgemäßen Gewichtssimulator für Fahrzeugprüfstände kann ein Kraftmesssensor zur Erfassung einer eingeleiteten Kraft in den Verbindungsbereich des Zugmittels oder in den Aufnahmebereich des Hubelements vorgesehen sein. Weiterhin kann der Kraftmesssensor auch zwischen dem Verbindungsbereich und dem ersten Abschnitt des Zugmittels angeordnet sein.

Das Kraftumlenkmittel kann eine Rolle sein. Das Kraftumlenkmittel kann auch eine zylindrische Gestaltung aufweisen, bzw. in der Art einer Walze.

Vorzugsweise kann in dem Gewichtssimulator für Fahrzeugprüfstände das Hubelement mittels einer Fernbedienung steuerbar sein. Dabei kann die Fernbedienung eine Eingabeeinrichtung zur Eingabe des vorbestimmten Kraftsollwerts, sowie eine Anzeigeeinrichtung für den Eingabewert aufweisen. Die Fernbedienung kann einen magnetischen Abschnitt aufweisen, so dass eine magnetische Verbindung mit dem Gewichtssimulator möglich ist. Dadurch kann die Fernbedienung beispielsweise während des Umrüstens des Prüfstands beim Verfahren des Fahrzeugs an dem Gewichtssimulator befestigt werden.

Weiterhin kann in dem Gewichtssimulator für Fahrzeugprüfstände ein Mittel zum Vorspannen des Zugmittels vorgesehen sein. Das Mittel zum Vorspannen des Zugmittels ermöglicht eine Verringerung des Durchhangs des Zugmittels vor dem Ausfahren des Hubelements, wodurch sich die Ansprechzeit für die Krafteinleitung in den Verbindungsbereich zum Fahrzeug verkürzt. Weiterhin kann mit dem Mittel zum Vorspannen die elastische Längung des Zugmittels unter einer Belastung kompensiert werden, so dass sich die Ansprechzeit für die Krafteinleitung in den Verbindungsbereich zum Fahrzeug zusätzlich verkürzt. Das Mittel zum Vorspannen des Zugmittels kann in Abhängigkeit von dem Zugmittel beispielweise ein Spannschloss, eine Winde oder ein Federelement sein. Weiterhin kann das Mittel zum Vorspannen des Zugmittels das Hubelement sein, wobei der Aufnahmebereich so weit ausgefahren wird, bis das Zugmittel die gewünschte Vorspannung aufweist.

In dem Gewichtssimulator für Fahrzeugprüfstände kann der Abstand in horizontaler Richtung zwischen dem Aufnahmebereich und dem Kraftumlenkmittel veränderbar sein. Mit dieser Konfiguration kann auf die unterschiedlichen Breiten der zu prüfenden Fahrzeuge reagiert werden, da sich ohne eine Verstellbarkeit der Position des Kraftumlenkmittels der Abstand in horizontaler Richtung zwischen der Schnittstelle zum Fahrzeugchassis und dem Kraftumlenkmittel in Abhängigkeit der Fahrzeugbreite verändert.

Vorzugsweise kann in dem Gewichtssimulator für Fahrzeugprüfstände zumindest ein Zugmittel ein Seil, ein Band oder eine Kette sein. Weiterhin kann das Zugmittel auch ein Gurt sein.

Bei einem erfindungsgemäßen Gewichtssimulator für Fahrzeugprüfstände kann das Zugmittel zumindest einen biegbaren Abschnitt aufweisen. Das Zugmittel kann vorzugsweise sowohl im ersten Abschnitt als auch im zweiten Abschnitt biegbar sein. Dasselbe gilt für den Kontaktbereich des Zugmittels mit dem Kraftumlenkmittel. Weiterhin kann wenigstens ein Abschnitt des Zugmittels nicht biegbar sein, was beispielsweise durch ein Verbinden einer Stange mit einem Gurt realisiert werden kann.

Weiterhin kann in dem Gewichtssimulator für Fahrzeugprüfstände die Krafterzeugungsvorrichtung ein Grubenheber sein. Dadurch kann mit einem bereits installierten Grubenheber das Fahrzeug im angehobenen Zustand mit erhöhter Sicherheit, aufgrund der in das Fahrzeug eingeleiteten Zugkräfte, auf dem Grubenheber festgehalten werden.

Weiterhin kann ein Prüfstand, insbesondere für Bremsvorgänge, zumindest eine Messanlage und einen Gewichtssimulator aufweisen, wobei das Kraftumlenkmittel an dem Gewichtssimulator angeordnet ist. Somit kann beispielsweise ein Grubenheber durch den Einbau von Kraftumlenkmitteln zu einem Gewichtssimulator nachgerüstet werden, der zusätzlich noch, wie vorstehend beschrieben, das angehobene Fahrzeug auf dem Grubenheber festhalten kann.

Bei einem erfindungsgemäßen Prüfstand, insbesondere für Bremsvorgänge, können zumindest eine Messanlage und ein Gewichtssimulator vorgesehen sein, wobei das Kraftumlenkmittel in einer Grube des Prüfstands verschiebbar angeordnet ist. In diesem Fall kann auf den Einsatz von U-Profilen als Führungsmittel verzichtet werden, so dass bereits installierte Grubenheber für das Niederziehen verwendet werden können. Sollte an dem Prüfstand keine Messanlage vorhanden sein, so kann mit dieser Konfiguration die Funktion des zusätzlichen, sicheren Verspannens des Fahrzeugs während des Anhebens, bzw. in einer angehobenen Stellung des Grubenhebers realisiert werden.

Weiterhin kann ein Gewichtssimulator für Fahrzeugprüfstände gegenüber liegend angeordnete drehbar gelagerte Kontaktmittel, insbesondere Rollen, aufweisen, die jeweils mit Führungsmitteln in Kontakt bringbar sind. Die Führungsmittel können Laufschienen einer Grube für die Aufnahme des Gewichtssimulators sein.

Vorzugsweise können bei einem Gewichtssimulator für Fahrzeugprüfstände die Kontaktmittel im unbelasteten Zustand des Verbindungsbereichs des Zugmittels in einem ersten Kontaktbereich mit dem zugehörigen Führungsmittel in Kontakt stehen, während die Kontaktmittel im belasteten Zustand des Verbindungsbereichs des Zugmittels in einem zweiten Kontaktbereich mit dem zugehörigen Führungsmittel in Kontakt stehen, der von dem ersten Kontaktbereich verschieden ist.

In einem erfindungsgemäßen Gewichtssimulator für Fahrzeugprüfstände können wenigstens zwei Zugmittel miteinander verbindbar sein. Dadurch kann die Länge des Zugmittels so gewählt werden, dass zum Einen ein bedienerfreundliches, d.h. vorzugsweise bei geringem Kraftaufwand, Verbinden des Zugmittels mit dem Fahrzeugchassis möglich ist, und zum Anderen der Durchhang des mit dem Fahrzeug verbundenen Zugmittels vor Beginn der Krafteinleitung des Hubelements möglichst gering ist, so dass bereits nach einem möglichst geringen Ausfahrweg des Kolbens eine Krafteinleitung des Zugmittels in das Chassis des Fahrzeugs stattfindet.

Weiterhin kann der Gewichtssimulator für Fahrzeugprüfstände verschiebbar sein, wobei eine Bewegung entlang der Lauf- bzw. Führungsschienen einer Grube in zwei Richtungen realisiert werden kann.

Weiterhin kann das Hubelement ein Zylinder sein, der pneumatischer, hydraulischer oder elektrischer Art ist. Der Zylinder kann dabei seine größte Kraft beim Ausfahren erzeugen, wobei diese vorzugsweise eine Druckkraft ist. Der Zylinder kann dabei als ein einfachwirkender Zylinder ausgebildet sein. In einer weiteren Ausführungsform kann der Zylinder ein doppeltwirkender Zylinder sein.

Vorzugsweise kann das Zugmittel während des Prüfvorgangs unter Belastung im Aufnahmebereich ortsfest sein.

Des Weiteren kann bei einem Gewichtssimulator das freie Ende des Hubelements oberhalb der Führungsmittel angeordnet sein.

Das Kraftumlenkmittel kann eine Schwenkbzw. Drehachse aufweisen, die im Wesentlichen in horizontaler Richtung angeordnet ist. Weiterhin kann die Schwenk.- bzw. Drehachse gegenüber der Horizontalen geneigt angeordnet sein, wobei der Neigungswinkel vorzugsweise im Bereich von 0° bis 60° sein kann.

Weiterhin kann bei einem erfindungsgemäßen Gewichtssimulator ein Kraftmesssensor vorgesehen sein, der eine von dem Hubelement auf das Zugmittel ausgeübte Kraft erfasst, wobei das Hubelement von einer Steuereinheit des Fahrzeugprüfstands derart angesteuert wird, dass die erfasste Kraft einen Wert annimmt, bei dem das Fahrzeug mit seinem zulässigen Fahrzeuggewicht in vertikaler Richtung belastet wird.

Im Folgenden soll nun die Funktionsweise eines erfindungsgemäßen Gewichtssimulators beschrieben werden. Zu Beginn eines Prüfvorgangs für einen Bremsenprüfstand wird das Fahrzeug mit der zu prüfenden Achse in den zugehörigen Prüfstandsbereich für die Bremsprüfung gefahren. Anschließend wird der Gewichtssimulator von dem Prüfer, bzw. von dem Werkstattpersonal, entlang der Lauf- bzw. Führungsschienen so weit verschoben, bis sich das freie Ende des Hubelements im Wesentlichen im Bereich der Schnittstelle für die Krafteinleitung des Zugmittels an dem Chassis des Fahrzeugs befindet.

Sodann wird der/die Verbindungsbereich(e) des Zugmittels mit dem Chassis des Fahrzeugs verbunden, wodurch die zu simulierenden Beladungskräfte von dem Gewichtssimulator in das Fahrzeug eingeleitet werden können. Vorzugsweise kann das Zugmittel über ein Vorspannmittel derart vorgespannt werden, dass das Zugmittel unter einer Zugbeanspruchung steht bzw. dass kein oder ein geringer Durchhang des Zugmittels vor dem Ausfahren des Kolbens des Hubelements auftritt.

Der Prüfer betätigt danach das Hubelement, wodurch der Kolben in vertikaler Richtung der Fahrzeugachse nach oben entgegen fährt und dabei eine Kraft über den Aufnahmebereich am freien Ende des Kolbens in das Zugmittel einleitet. Vorzugsweise kann die Betätigung des Hubelements mittels einer Fernbedienung, welche die Funktion des Gewichtssimulators steuert, erfolgen. Das Zugmittel wirkt dabei mit dem Kraftumlenkmittel zusammen, so dass sich vorzugsweise die Richtung der durch das Zugmittel übertragenen Kraft im Verbindungsbereich mit dem Fahrzeugchassis umkehrt, bzw. dass dort eine Kraftkomponente eingeleitet wird, die zur Ausfahrrichtung des Kolbens entgegen gesetzt ist. Weiterhin kann durch das Zusammenwirken des Zugmittels mit dem Kraftumlenkmittel eine Verstärkung oder eine Verringerung der vom Hubelement eingeleiteten Kraft in dem ersten Abschnitt des Zugmittels realisiert werden.

Während der Betätigung des Hubelements kann ein Kraftmesssensor die Kraft im Zylinderraum des Hubelements oder die Kraft im Verbindungsbereich des Zugmittels messen. Hat diese Kraft einen vorbestimmten Wert, den der Prüfer vor der Beginn der Prüfung an einer Bedien- bzw. Steuereinrichtung eingeben kann, erreicht, so wird die Betätigung des Hubelements gestoppt und der Kolben verbleibt in dieser Position bis zum Einfahren des Kolbens oder bis zu einer weiteren Betätigung des Hubelements. Das Chassis des Fahrzeugs wird nun unter der Wirkung des Zugmittels in Richtung Werkstattboden gezogen, wodurch eine Druckkraft über die Radaufhängung in den Reifen und damit auf die Schnittstelle Reifen/Prüfstand eingeleitet wird.

Nun kann der eigentliche Prüfvorgang beginnen, bei dem der Gewichtssimulator die zu simulierende Beladung des Anhängers übernimmt. Ist die Prüfung für diese Achse abgeschlossen, so wird der Kolben wieder eingefahren, wodurch in der Ruheposition des Kolbens im Wesentlichen keine Kräfte mehr auf das Chassis des Fahrzeugs wirken. Der Prüfer löst nun die Verbindung zwischen dem Fahrzeug und dem Zugmittel. Vorzugsweise kann der Verbindungsbereich des Zugmittels an dem Gewichtssimulator abgelegt werden, so dass es nicht zu einem Überfahren des Verbindungsbereichs beim Verfahren des Fahrzeugs kommt.

Das Fahrzeug wird nun so weit verfahren, bis sich eine andere Fahrzeugachse im Prüfstandbereich befindet. Der Gewichtssimulator wird wiederum entlang der Führungsschiene so weit verfahren, bis sich das freie Ende des Hubelements im Wesentlichen im Bereich der Schnittstelle für die Krafteinleitung des Zugmittels an dem Chassis des Fahrzeugs befindet. Der Prüfer kann dann den Verbindungsbereich des Zugmittels mit dem Chassis des Fahrzeugs verbinden. Der anschließende Prüfvorgang und der Mechanismus der Krafteinleitung des Gewichtssimulators sind identisch mit den vorstehend beschriebenen Ausführungen.

Vorteilhafte Ausgestaltungen und weitere Details der vorliegenden Erfindung werden im Folgenden anhand verschiedener Ausführungsbeispiele mit Bezug auf schematische Figuren beschrieben.

Fig. 1 zeigt eine perspektivische Ansicht eines Gewichtssimulators für Fahrzeugprüfstände gemäß der vorliegenden Erfindung,

Fig. 2 zeigt eine Vorderansicht des Gewichtssimulators für Fahrzeugprüfstände gemäß Fig. 1,

Fig. 3 zeigt eine Seitenansicht des Gewichtssimulators für Fahrzeugprüfstände gemäß Fig. 1, und

Fig. 4 zeigt eine Draufsicht des Gewichtssimulators für Fahrzeugprüfstände gemäß Fig. 1.

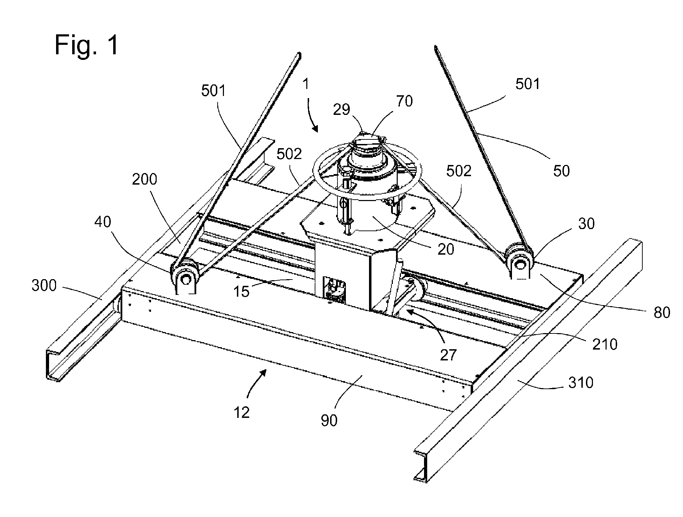

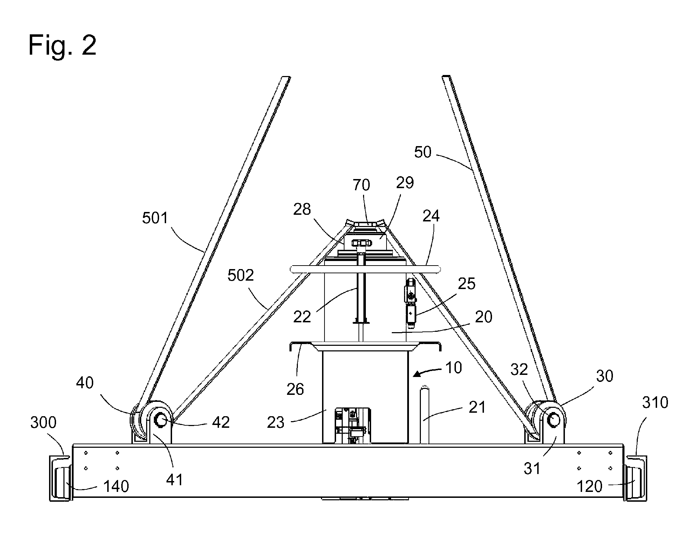

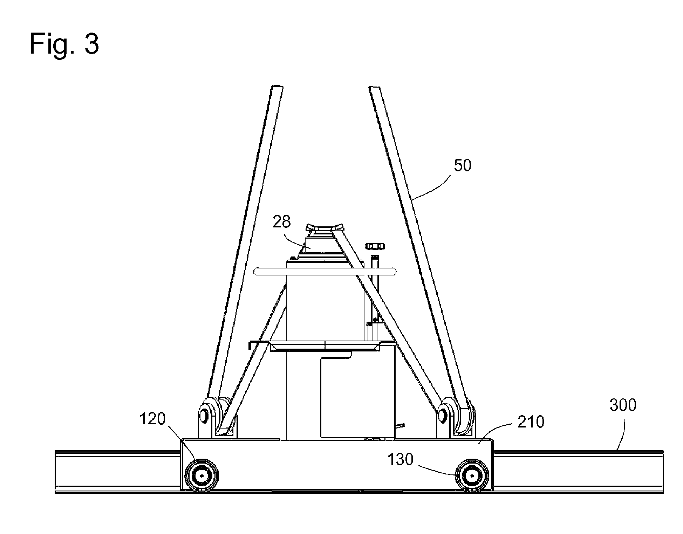

Bezugnehmend auf die Fig. 1-4 wird nun ein erfindungsgemäßer Gewichtssimulator für Fahrzeugprüfstände 1 beschrieben. Die wesentlichen Komponenten des Gewichtssimulators 1 bildet dabei eine Krafterzeugungsvorrichtung 10, welche in der Art eines Grubenhebers ausgebildet ist. Die Krafterzeugungsvorrichtung 10 wird von einer Plattform 12, welche in ihrem Inneren ein Hubelement 20 aufnimmt, sowie von einem ersten Kraftumlenkmittel 30, von einem zweiten Kraftumlenkmittel 40 und von einem Zugmittel 50 gebildet. Die beiden Kraftumlenkmittel 30, 40 sind jeweils in der Art eine Rolle ausgebildet. Das Zugmittel 50 ist ein flaches Band, das über die Rollen 30, 40 geführt wird. Das Hubelement 20 ist ein hydraulischer Zylinder, welcher von einer Quelle (nicht dargestellt) mit komprimiertem Öl versorgt wird.

Die Plattform 12 besteht aus einem ersten Längsholm 80 und einem zweiten Längsholm 90, die jeweils an ihren Längsenden mittels Verbindungsplatten 200, 210 miteinander verbunden sind. Die Plattform 12 weist deshalb eine rahmenartige Konstruktion auf. Die beiden Längsholme 80, 90 sind zudem in Querrichtung zu deren Längsrichtung voneinander beabstandet angeordnet, wobei ein interner Verfahrbereich 15 gebildet wird, in dem der Zylinder 20 quer zur Verfahrrichtung des Gewichtssimulators 1 verfahrbar ist.

An den Längsenden der Längsholme 80, 90 sind jeweils Rollen 120, 130, 140 und eine nicht sichtbare weitere Rolle drehbar gelagert angeordnet, die wiederum von Lauf- bzw. Führungsschienen 300, 310 aufgenommen werden und in diesen abrollen, so dass der Gewichtssimulator 1 entlang der Längsrichtung der Führungsschienen 300, 310 verschiebbar ist. Die Führungsschienen 300, 310 weisen jeweils in ihrem Profil eine U-förmige Gestaltung auf, wobei deren Öffnung zu den Rollen 120, 130, 140 hin zeigt. Die Führungsschienen 300, 310 sind fest am oberen Rand einer Grube (nicht dargestellt) eingebaut, wobei die Oberseite der Führungsschienen 300, 310 in etwa dem Höhenniveau des Werkstattbodens entspricht.

Der interne Verfahrbereich 15 wird jeweils von einer Längsseite eines Längsholms 80, 90 begrenzt, wobei entlang dieser Längsseite über die gesamte Länge des Längsholms 80, 90 jeweils eine innere Führungsschiene angeordnet ist, die ebenfalls eine U-förmige Gestaltung aufweist und deren Öffnung zu dem internen Verfahrbereich 15 hin zeigt. Der Zylinder 20 steht mittels einer Verfahrvorrichtung 27 mit den inneren Führungsschienen über Rollen in Kontakt, so dass der Zylinder 20 quer zur Längsrichtung der Führungsschienen 300, 310 entlang des internen Verfahrbereichs 15 verschiebbar ist.

Die Verfahrvorrichtung 27 weist einen Hebel 21 auf, der im internen Verfahrbereich 15 angeordnet ist und sich zum freien Ende des Zylinders 20 erstreckt. Mit Hilfe des Hebels 21 kann der Zylinder 20 in seiner Position entlang der inneren Führungsschiene arretiert oder wieder gelöst werden, wobei hierzu der Hebel 21 verschwenkt werden muss.

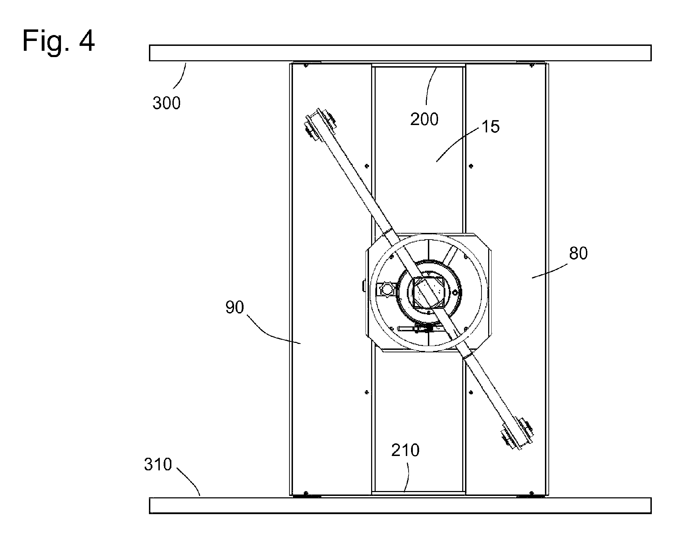

Am freien Ende des Kolbens 28 des Zylinders 20 ist ein Aufnahmebereich 70 zum form- und/oder kraftschlüssigen Aufnehmen des Bands 50 ausgebildet. Der Aufnahmebereich 70 befindet sich in der eingefahrenen Stellung des Kolbens 28 des Zylinders 20 oberhalb der Oberseite der beiden Längsholme 80, 90. Der Aufnahmebereich 70 ist als ein separates Bauteil ausgebildet, das mit dem Kolben 28 des Zylinders 20 konzentrisch verschraubt ist. Zur Aufnahme des Bands 50 weist der Aufnahmebereich 70 eine Aussparung auf, deren Breite im Wesentlichen der Breite des Bands 50 entspricht. Die Tiefe der Aussparung ist derart gewählt, dass das Band 50 über seine gesamte Dicke darin aufgenommen wird. Die Aussparung ist derart orientiert, dass deren Längsachse mit der Bandführungsrichtung der Rollen 30, 40 fluchtet (siehe hierzu Fig. 4). Der Aufnahmebereich 70 ist mit einem Sicherungselement verbunden, das ein Herauslösen des Bandes 50 aus der Aussparung im ungespannten Zustand verhindert.

Im Bereich der Außenseite des Zylinders 20 ist ein pneumatischer Steuerblock 25 angeordnet. Etwa im Mittenbereich des Zylinders 20 ist ein Schutzblech 26 angeordnet, welches den Zylinder 20 umschließt und sich in radialer Richtung zur Zylindersachse von diesem weg erstreckt. Sollte das Band 50 unter Belastung reißen, so schützt das Schutzblech 26 die unterhalb angeordneten Komponenten vor den sich nunmehr unkontrolliert bewegenden freien Enden des gerissenen Bands 50. Das Schutzblech 26 ist aus zwei Stücken ausgebildet, die jeweils spiegelbildlich zueinander sind, wobei deren freie radiale Enden nach unten abgebogen sind.

Unterhalb des Schutzblechs 26 befindet sich eine Verkleidung 23 für den Zylinder 20, welche diesen im Wesentlichen vollständig umschließt und eine quaderförmige Gestaltung, bei einer gleichzeitig geringen Wandstärke, aufweist. Die Verkleidung 23 ist mit der Verfahrvorrichtung 27 verbunden. Im Inneren der Verkleidung 23 befinden sich eine Vielzahl von Ventilen und Steuereinrichtungen (nicht dargestellt) für den Zylinder 20.

Des Weiteren befindet sich unterhalb des Aufnahmebereichs 70 ein Bandvorspanner 24, der eine ringförmige Gestaltung aufweist, und dessen Durchmesser größer als der Durchmesser des Zylinders 20 ist. Der Badvorspanner 24 ist konzentrisch zur Kolbenachse des Zylinders 20 angeordnet. Die vertikale Stellung des Bandvorspanners 24 lässt sich mittels einer Verstelleinrichtung 22 einstellen, wobei eine Drehbewegung an einem Drehrad der Verstelleinrichtung 22 in eine translatorische Auf- oder Abbewegung des Bandvorspanners 24 umgewandelt wird. Kommt die Oberfläche des Bandvorspanners 24 mit dem Band 50, genauer gesagt mit der Innenseite des Bandes 50, in Kontakt, so wird, bei einer sinnfällig gewählten Länge des Bandes 50 und bei einer Verbindung des Verbindungsbereichs des Bandes 50 (nicht dargestellt) mit dem zu prüfenden Fahrzeug (nicht dargestellt), das Band 50 in der eingefahrenen Stellung des Kolbens 28 vorgespannt, wodurch bei einer Ausfahrbewegung des Kolbens 28 die eingeleiteten Kräfte von dem Zylinder 20 möglichst direkt, d.h. ohne eine signifikante zeitliche Verzögerung infolge eines Vorspannvorgangs des Bands 50, über die Rollen 30, 40 in das zu prüfende Fahrzeug eingeleitet werden.

Die Rollen 30, 40 sind symmetrisch zu einer vertikalen Achse durch den inneren Verfahrbereich 15 angeordnet. Die Rollen 30, 40 weisen in ihrem Mittenbereich einen geringeren Durchmesser als im Bereich ihrer Längsenden auf. Die Breite des Bereichs mit dem geringeren Durchmesser entspricht im Wesentlichen der Breite des Bandes 50. Die Längsenden des Rollen 30, 40 sorgen mit ihrem größeren Durchmesser für eine seitliche Führung des Bandes 50.

Die Rolle 30 wird von einem ersten Lagerungsbolzen 32 aufgenommen, der wiederum von einem ersten Lagerungskörper 31 aufgenommen wird, wobei zwei gegenüber liegend angeordnete Schenkel mit jeweils einer Bohrung, die jedoch zueinander fluchten, für die Aufnahme des ersten Lagerungsbolzens 32 darin sorgen. Dasselbe gilt entsprechend für den Aufbau eines zweiten Lagerungskörpers 41, der mittels eines zweiten Lagerungsbolzens 42 mit der Rolle 40 in Verbindung steht. Der erste Lagerungskörper 31 ist auf der Oberseite des ersten Längsholms 80 befestigt, während der zweite Lagerungskörper 41 auf der Oberseite des zweiten Längsholms 90 befestigt ist. Die Lagerungskörper 31, 41 sind jeweils im Bereich eines Längsendes des zugehörigen Längsholmes 80, 90 auf gegenüber liegenden Seiten angeordnet. Die Drehachsen der Rollen 30, 40 sind gegenüber der Längsachse der Längsholme 80, 90 um die vertikale Achse gedreht.

Das Band 50 ist in der Art eines flachen Endlosbandes ausgeführt, wobei der Verbindungsbereich mit dem zu prüfenden Fahrzeug ebenfalls als flaches Band ausgebildet ist. Das Band 50 steht mit seiner Außenseite mit dem Aufnahmebereich 70 in Kontakt, während die Rollen 30, 40 mit der Innenseite des Bands 50 in Kontakt stehen. Das Band 50 besteht aus einem Kunststoff, der mittels Fasern verstärkt sein kann. Wenn der Verbindungsbereich des Bandes 50 nicht mit dem zu prüfenden Fahrzeug verbunden ist, so kann dieser bspw. auf den Längsholmen 80, 90 abgelegt werden.

Der Bereich des Bandes 50 zwischen den Rollen 30, 40 und dem Verbindungsbereich mit dem zu prüfenden Fahrzeug ist hier aus Gründen der Veranschaulichung zum Zylinder 20 hin geneigt dargestellt. Im Rahmen einer Prüfsituation an einem Bremsprüfstand wird dieser Bereich jedoch im Wesentlichen eine vertikale Ausrichtung aufweisen, wodurch die vom Zylinder 20 eingeleiteten Kräfte mit möglichst geringen Verlusten in das Fahrzeug eingeleitet werden. Dabei steht dann die Innenseite des Bandes 50 mit ungefähr einem Viertel des äußeren Umfangs des Mittenbereichs der Rollen 30, 40 in Verbindung.

Die gezeigten Ausführungsbeispiele sind rein illustrativ und nicht beschränkend auszulegen. An ihnen können zahlreiche Änderungen vorgenommen werden, ohne den Schutzumfang der Ansprüche zu verlassen. Beispielsweise kann anstatt einer Rolle als Kraftumlenkmittel ein (Doppel)kegel vorgesehen sein oder mehrere Bänder zu einem Band, das eine geeignete Länge für die Verbindung mit dem zu prüfenden Fahrzeug aufweist, verbunden sein.

**Patentansprüche**

1. Gewichtssimulator für Fahrzeugprüfstände (1), mit

   - einer Krafterzeugungsvorrichtung (10), die ein Hubelement (20) aufweist, das im Bereich seines freien Endes (29) einen Aufnahmebereich (70) zum Aufnehmen von zumindest einem Zugmittel (50) aufweist; wobei zumindest ein Kraftumlenkmittel (30, 40) vorgesehen ist, das mittels des Zugmittels (50) mit dem Hubelement (20) zusammenwirkt, wobei das Zugmittel (50) einen ersten Abschnitt (501) mit zumindest einem Verbindungsbereich aufweist, der mit einem zu prüfenden Fahrzeug verbindbar ist,

   wobei das Hubelement (20) beim Ausfahren über das Kraftumlenkmittel (30, 40) mit dem Zugmittel (50) derart zusammenwirkt, dass das Zugmittel (50) zumindest eine Kraftkomponente in entgegengesetzter Richtung zur Ausfahrrichtung des Hubelements (20) in den Verbindungsbereich des Zugmittels (50) einleitet.

2. Gewichtssimulator für Fahrzeugprüfstände nach Anspruch 1, **dadurch gekennzeichnet, dass** das Kraftumlenkmittel (30, 40) in vertikaler Richtung relativ zum freien Ende (29) des Hubelements (20) derart angeordnet ist, dass ein mit dem Hubelement (20) in Kontakt stehender zweiter Abschnitt (502) des Zugmittels (50) im Wesentlichen horizontal oder nach unten verlaufend angeordnet ist.

3. Gewichtssimulator für Fahrzeugprüfstände nach Anspruch 1 oder 2, **dadurch gekennzeichnet, dass** das Hubelement (20) von einem Ruhezustand bis zum Erreichen eines vorbestimmten Kraftsollwerts um den Betrag $\Delta h_1$ ausfährt, und der Verbindungsbereich des Zugmittels (50) sich dabei in vertikaler Richtung um den Betrag $\Delta h_2$ bewegt, wobei das Verhältnis $\kappa = \Delta h_1 / \Delta h_2$ der Verfahrwege im Bereich von 1,5 bis 20 liegt.

4. Gewichtssimulator für Fahrzeugprüfstände nach Anspruch 3, **dadurch gekennzeichnet, dass** ein Mittel zum Einstellen der Länge des Zugmittels (50) vorgesehen ist.

5. Gewichtssimulator für Fahrzeugprüfstände nach zumindest einem der Ansprüche 1-4, **dadurch gekennzeichnet, dass** eine Vielzahl von Kraftumlenkmittel (30, 40) vorgesehen und derart angeordnet sind, dass dadurch eine Übersetzung der eingeleiteten Kraft des Hubelements (20) in den Verbindungsbereich des Zugmittels (50) realisierbar ist.

6. Gewichtssimulator für Fahrzeugprüfstände nach zumindest einem der Ansprüche 1-5, **dadurch gekennzeichnet, dass** die Kraftumlenkmittel (30, 40) symmetrisch angeordnet sind.

7. Gewichtssimulator für Fahrzeugprüfstände nach zumindest einem der Ansprüche 1-6, **dadurch gekennzeichnet, dass** zwischen einer horizontalen Ebene, die sich durch den Aufnahmebereich (70) erstreckt, und dem zweiten Abschnitt (502) des Zugmittels (50), zu einem Zeitpunkt, an dem sich das Hubelement (20) in der eingefahrenen Stellung befindet, ein Winkel gebildet wird, der im Wesentlichen 45° beträgt.

8. Gewichtssimulator für Fahrzeugprüfstände nach zumindest einem der Ansprüche 1-7, **dadurch gekennzeichnet, dass** ein Kraftmesssensor vorgesehen ist, der zur Erfassung einer eingeleiteten Kraft in den Verbindungsbereich des Zugmittels (50) oder in den Aufnahmebereich (70) des Hubelements (20) vorgesehen ist.

9. Gewichtssimulator für Fahrzeugprüfstände nach zumindest einem der Ansprüche 1-8, **dadurch gekennzeichnet, dass** ein Mittel (22, 24) zum Vorspannen des Zugmittels (50) vorgesehen ist.

10. Gewichtssimulator für Fahrzeugprüfstände nach zumindest einem der Ansprüche 1-9, **dadurch gekennzeichnet, dass** der Abstand in horizontaler Richtung zwischen dem Aufnahmebereich (70) und dem Kraftumlenkmittel (30, 40) veränderbar ist.

11. Gewichtssimulator für Fahrzeugprüfstände nach zumindest einem der Ansprüche 1-10, **dadurch gekennzeichnet, dass** zumindest ein Zugmittel (50) ein Seil, ein Band, ein Gurt oder eine Kette ist.

12. Gewichtssimulator für Fahrzeugprüfstände nach zumindest einem der Ansprüche 1-11, **dadurch gekennzeichnet, dass** das Zugmittel (50) zumindest einen biegbaren Abschnitt aufweist.

13. Gewichtssimulator für Fahrzeugprüfstände nach zumindest einem der Ansprüche 1-12, **dadurch gekennzeichnet, dass** die Krafterzeugungsvorrichtung (10) ein Grubenheber ist.

14. Gewichtssimulator für Fahrzeugprüfstände nach zumindest einem der Ansprüche 1-13, **dadurch gekennzeichnet, dass** ein Kraftmesssensor vorgesehen ist, der eine von dem Hubelement (20) auf das Zugmittel (50) ausgeübte Kraft erfasst, wobei das Hubelement (20) von einer Steuereinheit des Fahrzeugprüfstands derart angesteuert wird, dass die erfasste Kraft einen Wert annimmt, bei dem das Fahrzeug mit seinem zulässigen Fahrzeuggewicht in vertikaler Richtung belastet wird.

15. Prüfstand, insbesondere für Bremsvorgänge, mit einem Gewichtssimulator nach zumindest einem der Ansprüche 1-14.

## Fig. 1

# Fig. 2

Fig. 3

Fig. 4